# EUROPÄISCHE PATENTSCHRIFT

(11) **EP 1 358 554 B1**
(45) Veröffentlichungstag und Bekanntmachung des Hinweises auf die Patenterteilung: **20.04.2005**
(21) Anmeldenummer: 02702300.1
(22) Anmeldetag: 23.01.2002
(51) Int. Cl.: G06F 11/14, G06F 11/00

(54) **AUTOMATISCHE INBETRIEBNAHME EINES CLUSTERSYSTEMS NACH EINEM HEILBAREN FEHLER**
AUTOMATIC STARTUP OF A CLUSTER SYSTEM AFTER OCCURRENCE OF A RECOVERABLE ERROR
MISE EN MARCHE AUTOMATIQUE D'UN SYSTEME A CONFIGURATION EN GRAPPE APRES UNE ERREUR REPARABLE

(30) Priorität: 09.02.2001 EP 01103108
(43) Veröffentlichungstag der Anmeldung: 05.11.2003
(73) Patentinhaber: SIEMENS AKTIENGESELLSCHAFT, 80333 München (DE)
(72) Erfinder: KRAUSS, Dietmar, 81476 München (DE); BRAGULLA, Jürgen, 81379 München (DE)
(86) Internationale Anmeldenummer: PCT/EP2002/000657
(87) Internationale Veröffentlichungsnummer: WO 2002/065289

(56) Entgegenhaltungen:
- WO-A-95/15529
- WO-A-99/05596
- US-A- 5 502 812
- SUN: "Sun Clusters" SUN WHITE PAPER, [Online] Oktober 1997 (1997-10), Seiten 1-33, XP002171157 Gefunden im Internet: <URL:www.sun.com/software/cluster/wp-suncl usters/sunclusterswp.pdf> [gefunden am 2001-07-04]
- DEETHS DAVID: "Administering SUN (tm) Cluster 2.2 environments" SUN BLUEPRINTS, [Online] Oktober 2000 (2000-10), Seiten 1-21, XP002171158 Gefunden im Internet: <URL:www.sun.com/blueprints/1000/clust_adm in.pdf> [gefunden am 2001-07-04]

## Beschreibung

Die Erfindung betrifft ein Verfahren zur Inbetriebnahme eines Clusters nach einem Fehler, bestehend aus mehreren Knoten, bei denen im Fehlerfall jeweils ein Knoten die Jobs eines weiteren Knotens (12) übernimmt.

Die Erfindung liegt auf dem Gebiet der Hochverfügbarkeitssysteme, und insbesondere darin, einen automatischen Übergang in einen fehlerfreien Betriebszustand des Clusters nach einem Hochlauf eines defekten Knotens zu gewährleisten.

Grundsätzlich gibt es verschiedenste Fehlerquellen, die dazu führen, daß eine Maschine oder ein System von Rechnern neu gestartet werden muß, da sich der Fehler als so hartnäckig erweist, daß dies die einzige Möglichkeit darstellt, ihn zu beheben. Ein solcher Reset eines Systems setzt üblicherweise den Einsatz von manuellen Befehlen voraus. Berücksichtigt man die Zeit, die benötigt wird, ein System manuell, insbesondere durch interaktive Eingaben zu starten, so wird deutlich, daß dies bei Systemen die eine hohe Verfügbarkeit erfordern, nicht tragbar ist.

Deshalb gab es bisher Bestrebungen, einen Restart eines Systems zu automatisieren. So zeigt die US 5708776 ein Verfahren zur automatischen Wiederherstellung des Zustandes vor dem Fehler für Netzwerk Anwendungen. Dazu werden eine erste und eine zweite Reboot Partition zur Verfügung gestellt. Erweist sich das Booten von der ersten Reboot Partition als nicht erfolgreich, wird das System von der zweiten Partition gebootet. Ein Überwachungsprozessor führt die Software für das automatische Recovery aus, nach dem ein Fehler in einer Betriebssystem-Software oder einer Applikationssoftware entdeckt worden ist. Diese Druckschrift enthält jedoch keine Hinweise auf die Inbetriebnahme eines Clustersystems nach einem Reboot. Ein Cluster wieder in Betrieb zu nehmen bedeutet, wesentlich mehr und komplexere Interdependenzen der einzelnen Knoten zu berücksichtigen, was im allgemeinen durch einen Cluster Controller gesteuert wird.

Für Systeme, die eine maximale Verfügbarkeit voraussetzen, wie beispielsweise Carrier-Grade-Systeme auf dem Gebiet der Telekommunikation oder Systeme im Kranken- oder Finanzwesen, sind hochverfügbare Rechnerarchitekturen eingeführt worden, die eine maximale Ausfallsicherheit gewährleisten sollen. Die auszuführenden Tasks sollen dabei rund um die Uhr und ohne Unterbrechung ausgeführt werden können.

Dazu werden insbesondere Clustersysteme eingesetzt. Unter diesem Begriff sind Systeme verschiedener Art zusammengefaßt, bei denen mehrere, jeweils autonome Maschinen mit redundanten Ressourcen vernetzt sind und von einem Cluster-Controller in ihrem Einsatz gesteuert werden.

Man unterscheidet zwischen Aktiv-Passiv und Aktiv-Aktiv Clusterarchitekturen. Bei den aktiv-passiven Clustern, sind - virtuell - jeweils Paare von Maschinen bzw. Servern gebildet, wobei ein Server aktiv ist und den jeweiligen Dienst anbietet oder die jeweilige Software ausführt. Findet dabei kein Fehler statt, so läuft der andere Server grundsätzlich im Stand-By- oder Passiv-Modus. Erst wenn ein Fehler bei dem aktiven Server bemerkt wird, übernimmt dieser dessen Jobs. Der passive Server läuft dabei ohne Aufgabe im Stand-By-Betrieb und springt im Fehlerfall möglichst schnell ein.
Bei Aktiv-Aktiv-Clustern übernimmt jeder Server innerhalb des Clusters eine Aufgabe und beide arbeiten parallel aktiv. Je nach Systemkonfiguration übernimmt im Fehlerfall der intakte Server alle Aufgaben des defekten Servers. Mit dem Aktiv-Aktiv-Konzept kann eine bessere Lastverteilung als bei der Aktiv-Passiv-Architektur erzielt werden.

Unabhängig von der jeweiligen Architektur übernimmt bei Clustersystemen ein noch funktionsfähiger Server im Fehlerfall die Jobs des defekten Servers. Dieser Vorgang wird als Fail-Over bezeichnet.

Neben der Rechnerhardware muß für hochverfügbare Systeme auch noch das externe Speichersystem an das Clustersystem angepaßt sein. Beispielsweise können Daten redundant auf verteilten Speichern abgelegt werden, um die Sicherheit des Systems zu erhöhen. So verwendet das sogenannte RAID-1-System (Redundant Array of Inexpensive Disks") ein Redundanzkonzept, das auf einer Spiegelung von Datensätzen basiert.

Wesentlich bei allen Clustersystemen ist, daß sie auf einer "intelligenten" Steuerung, Koordination und Kommunikation zwischen den einzelnen Clusterrechnern basieren. Es muß beispielsweise festgelegt sein, welche Übergabeprotokolle Verwendung finden, wie die einzelnen aufzuteilenden Prozesse miteinander kommunizieren oder nach welchen Kriterien das Fail-Over gesteuert wird. Ein wesentlicher Punkt ist ferner, daß die Integrität des Clusters erhalten bleibt. So muß gewährleistet sein, daß auch nach einem Reboot des Systems konsistente Datensätze auf allen Knoten vorhanden sind.

Tritt bei einem Clustersystem nun ein zwar behebbarer aber dennoch so schwerwiegender Fehler auf, daß ein Knoten neu gebootet werden muß, so war es bisher nach dem Reboot des Knotens erforderlich, den Cluster durch manuelle Eingabe von Befehlen in Betrieb zu nehmen.

Die JP 14 87 04 A2 zeigt in diesem Zusammenhang ein Verfahren zur Aufrechterhaltung des Betriebs eines Clusters, bei dem ein Fehler in einem Speicherbereich des Clusters erkannt worden ist. Dabei informiert ein Systemcontroller, der auf jedem Knoten eingerichtet ist über einen Fehler und leitet diese Fehlermeldung an eine zentrale Stelle weiter, damit verhindert werden kann, daß dieser fehlerhafte Knoten zu einer Downtime des Clusters führt. Es wird allerdings kein Hinweis darauf gegeben, wie ein Cluster nach einem Reboot aufgrund von unterschiedlichsten Fehlern wieder automatisch in Betrieb genommen werden kann. Auch hier ist eine manuelle Inbetriebnahme des Clusters nach einem Reboot erforderlich.

In dem Dokument der Firma SUN®, "Sun Clusters", SUN WHITE PAPER, XP-0021771157, Seite 1 bis 33, gefunden von der International Search Agency am 04. Juli 2001 im Internet unter dem Verweis <URL:www.sun.com/software/cluster/wp-suncl> ist ein weiterer, mehrere Knoten umfassender Cluster offenbart, bei dem wiederum eine manuelle Inbetriebnahme des Clusters nach einem Reboot eines Knotens des Clusters erforderlich ist.

In WO 99/05596 ist ein Verfahren zum Rebooten eines Knotens nach einem Fehler offenbart, bei dem solange versucht wird, den Knoten mit immer weniger Funktionalität zu rebooten, bis der Fehler nicht mehr auftritt. Wenn dies nicht gelingt, wird ein Reboot des Knoten mit einer früheren Version des Knotens versucht. Gelingt auch dies nicht, ist das Rebooten des Knoten fehlgeschlagen und der Knoten dauerhaft ausgefallen. Der Knoten ist in kein Cluster eingebunden, sodass eine Inbetriebnahme des Clusters im Anschluss an ein erfolgreiches Rebooten des Knotens nicht erforderlich ist.

Die manuelle Inbetriebnahme von Clustern ist bei Hochverfügbarkeitsclustern aufgrund der dadurch erhöhten Ausfallzeiten nicht vertretbar.

Die vorliegende Erfindung hat sich deshalb zur Aufgabe gestellt ein Verfahren zur Verfügung zu stellen, das eine automatische, zeitoptimierte Inbetriebnahme eines Clustersystems, insbesondere eines Stand-By-Clusters, ermöglicht, nachdem ein Reboot eines defekten Knotens aufgrund eines heilbaren Fehlers erfolgte.

Diese Aufgabe wird durch das eingangs erläuterte Verfahren mit folgenden Schritten gelöst:
- Bestimmung von mindestens einer ersten und einer zweiten Fehlerklasse,
- Analyse des Fehlers, der zu einem Reboot des ersten Knotens führte
- Klassifikation des Fehlers in eine der Fehlerklassen
- automatische Inbetriebnahme des Clusters mit den Knoten, falls der Fehler in die erste Fehlerklasse klassifiziert worden ist.

Die Lösung der Aufgabe gemäß Hauptanspruch besteht insbesondere darin, daß der Cluster nach einem heilbaren Fehler in einem Knoten des Clusters, der zu einem Reboot geführt hat, selbständig und automatisch in seinen Betriebszustand zurückkehren kann.

In einer bevorzugten Ausführungsform der Erfindung wird das Verfahren mit einem EWSD-System realisiert, an das ein SUN-Cluster angebunden wird. EWSD (Elektronisches Wählsystem, digital) ist ein öffentliches, digitales Vermittlungssystem, bei dem bereits über 200 Mio. Ports in verschiedenen Staaten eingerichtet worden sind.

In diesem Ausführungsbeispiel wird ein geographisch entfernt eingerichtetes Telefonnetz mit einer zentralen Überwachungseinrichtung auf Fehler überwacht. Liegt ein behebbarer Fehler vor, der beispielsweise durch einen Software Fehler oder durch eine Unterbrechung der Stromversorgung ausgelöst worden ist (diese Fehler werden als temporäre Fehler eingestuft, die sich durch ein automatisiertes Verfahren wieder beheben lassen sollten), dann kann das Telefonnetz erfindungsgemäß von zentraler Stelle - ohne manuelles Eingreifen vor Ort - wieder in Betrieb genommen werden.

Durch die automatisierte Inbetriebnahme eines Clustersystems nach einem Reboot ergeben sich insbesondere auf dem Gebiet der Applikationen für Netzbetreiber und Dienstleistungsanbieter wesentlich verbesserte Ausfallzeiten der eingesetzten Software.

In den bevorzugten Ausführungsformen der Erfindung wird das Verfahren für eine automatische Inbetriebnahme eines SUN-Clustersystem 2.x eingesetzt.

Eine besonders vorteilhafte Ausführungsform der Erfindung bezieht sich auf ein aktiv-passiv Clustersystem, das beispielsweise aus einem oder mehreren Paaren von Servern besteht, wobei ein Server eine bestimmte Aufgabe ausführt, die ihm zugeordnet ist. Die andere Maschine befindet sich im Stand-By-Modus. Erst wenn die erste Maschine meldet, daß Probleme auftreten, übernimmt die zweite Maschine die Jobs der ersten. Die jeweils aktiven Server müssen deshalb fortlaufend überwacht werden. Der aktive Server könnte beispielsweise aufgrund eines Hardwarefehlers, einer Blockierung des Betriebssystems oder aufgrund einer Netzspannungsunterbrechung komplett ausfallen.

Um die Verfügbarkeit zu erhöhen und andere Systemparameter vorteilhaft zu beeinflussen werden vielfach auch Aktiv-Aktiv-Cluster eingesetzt. Eine alternative Ausführungsform des erfindungsgemäßen Verfahrens ist in der Anwendung auf derartige Architekturen zu sehen.

In einer weiteren vorteilhaften Ausführungsform der Erfindung wird als Betriebssystem Umgebung "Solaris" verwendet.

Die Erfindung ist insbesondere darin zu sehen, daß eine automatische und vor allem dynamische Generierung einer Inbetriebnahmestrategie für den Cluster erfolgt - abhängig von der Analyse des vorausgegangenen Fehlers, der zu dem Reset des Servers geführt hat -.

Andere vorteilhafte Weiterbildungen der Erfindung ergeben sich aus den Unteransprüchen.

Weitere Vorteile der Erfindung und besondere Ausführungsformen mit deren Merkmalen sind in der nachfolgenden detaillierten Figurenbeschreibung dargestellt. Darin zeigt:
Fig. 1 eine schematische Darstellung eines Clustersystems und
Fig. 2 ein Flußdiagramm für eine Durchführung des Zustandswechsels gemäß einer bevorzugten Ausführungsform der Erfindung.

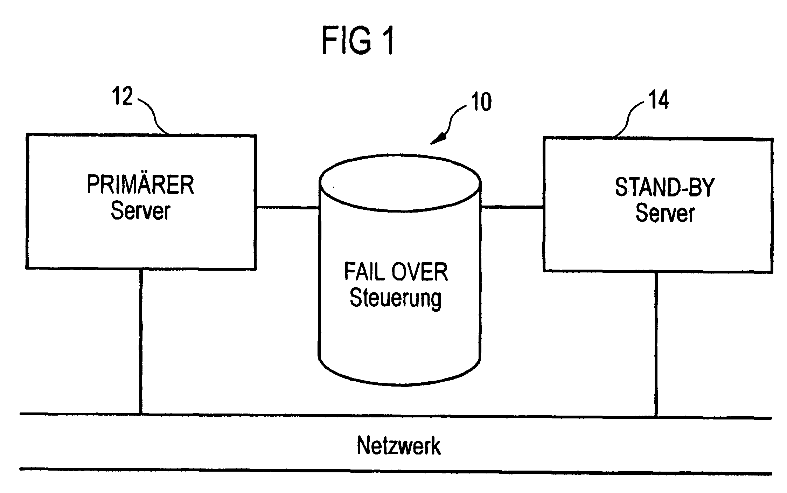

Nachfolgend wird unter Bezugnahme auf Figur 1 eine übliche Clusterarchitektur - wie sie im Stand der Technik bekannt ist - dargestellt.
In einer bevorzugten Ausführungsform der Erfindung ist das Verfahren für ein Cluster 10 realisiert, das hochverfügbare Anwendungen unterstützt. Es ist insbesondere ein Aktiv-Stand-By-Cluster . Diese umfassen üblicherweise ein Paar von Servern, die hier auch Knoten genannt werden. Es wird ein erster Knoten 12 als primärer Server definiert, dem bestimmte Jobs zugewiesen sind. Ein zweiter Knoten 14 wird als Stand-By-Server festgelegt. In diesem Ausführungsbeispiel weist der erste Knoten 12 eine Fehler auf und wird deshalb auch als defekter Knoten bezeichnet, während der zweite Knoten 14 der intakte Knoten ist. Es liegt natürlich ebenso im Rahmen der Erfindung, daß der zweite Knoten 14 ausfällt und als defekter Knoten berücksichtigt wird.
Der zweite Knoten 14 dient dazu, im Fehlerfall, das heißt bei Ausfall des primären Servers (des ersten bzw. defekten Knotens 12) dessen Jobs zu übernehmen und dann nicht mehr als Stand-By-Server sondern als neuer primärer Server zu fungieren. Durch diese Architektur kann die "Down-Time" des Systems minimiert werden.

Für die Erkennung eines Fehlerzustandes und die Steuerung des Übernahmeprozesses gibt es unterschiedlichste sogenannte Failover-Konzepte.
Beispielsweise muß die auszuführende Software, die generell nur auf einer dafür vorgesehenen Maschine laufen soll, hier auch auf allen anderen Knoten lauffähig sein, damit diese im Fehlerfall ein fehlerfreies Failover gewährleisten können.

Selbstverständlich ist das Verfahren ebenso auf Systeme anwendbar, die komplexere Architekturen aufweisen.

Die beiden Knoten 12, 14 sind über eine Hochgeschwindigkeitsschnittstelle miteinander gekoppelt, was durch die Verbindungslinien zwischen den beiden Servern 12, 14 in Fig. 1 gekennzeichnet ist.

Mit Hilfe des erfindungsgemäßen Verfahrens können die geplanten und ungeplanten Downtimes des Systems weiter minimiert werden, indem der Cluster 10 nach einem schwerwiegenden Fehler einer Reboot-Operation unterzogen wird und daraufhin bzw. währenddessen automatisch wieder in Betrieb genommen wird.

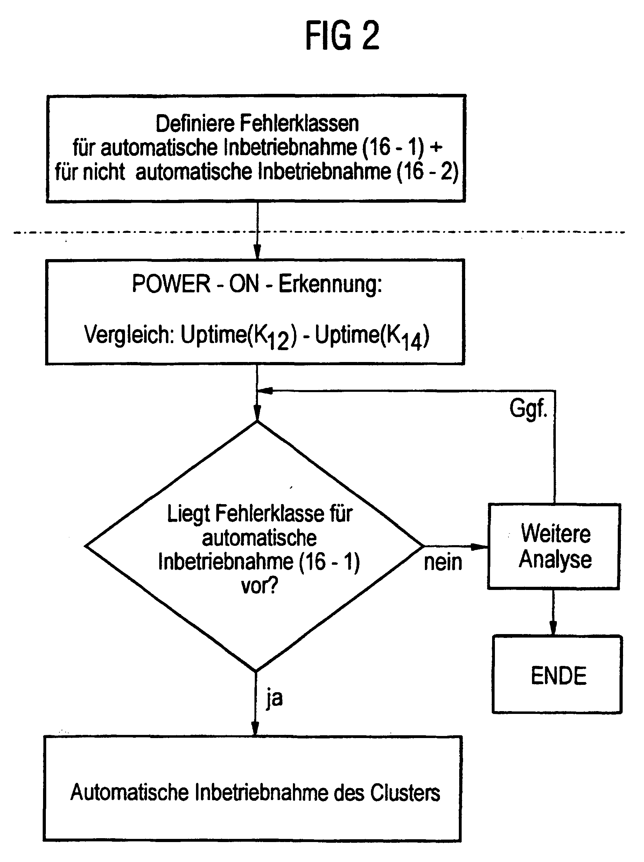

Im Hinblick auf das in Figur 2 dargestellte Flow-Chart sollen nachfolgend die erfindungsgemäßen Schritte beschrieben werden.
Das Verfahren setzt in den Fällen ein, in denen das Clustersystem aufgrund eines Software Fehlers oder aufgrund eines zentralen Spannungsausfalls nochmals hochgefahren werden muß.

Um zwischen diesen und weiteren Fehlerklassen bzw. Fallgruppen zu unterscheiden, wird ein sogenannter Power-On-Erkennungsmechanismus eingesetzt. Hierzu werden der erste und zweite Knoten 12 und 14 einer Analyse unterzogen, die insbesondere die Lebenszeit beider Knoten ausliest und in der weiteren Verarbeitung berücksichtigt. Die sogenannte Uptime des ersten Knotens 12 wird dabei mit der Uptime des zweiten Knotens 14 verglichen. Stimmen beide Zeiten bis auf einen vorbestimmten Toleranzwert (der die Abweichungstoleranz festlegt) überein, dann kann daraus indirekt geschlossen werden, daß es sich um einen zentralen Spannungsausfall gehandelt haben muß, aufgrund dessen das System einem Reboot unterzogen worden ist. Der Toleranzwert ist durch die Eingabe eines Schwellenwertes bestimmbar. Dieser kann system- und anwendungsabhängig variieren. Wird andernfalls beispielsweise erfaßt, daß der erste Knoten 12 bereits mehrere Tage lebt, während der zweite Knoten 14 nur im Bereich von Minuten aktiv war, dann kann es sich nicht um eine zentrale Unterbrechung der Spannungsversorgung gehandelt haben.

Wird bei dem Power-On-Mechanismus festgestellt, daß die jeweiligen Uptimes signifikant voneinander abweichen, so kann indirekt auf einen anderen Fehler (z.B. Hardware-Fehler, Software Fehler, Spannungsausfall eines einzelnen Knotens) rückgeschlossen werden. In diesem Fall wird die automatische koordinierte Aufnahme beider Knoten in den Cluster 10 angestoßen. Bei der anschließenden Inbetriebnahme des Clustersystems 10 kann dadurch der fehlerfreie Zustand auf allen Clusterknoten 12, 14 aktiviert werden.

Für die generelle Steuerung des Verfahrens können vor dem jeweiligen Ablauf des Inbetriebnahmeverfahrens Fehlerklassen 16 festgelegt werden, die durch die Angabe bestimmter Parameter definiert werden. Dieser erste Verfahrensschritt kann unabhängig von dem Clusterbetrieb erfolgen und diesem vorgeschaltet sein; dies soll durch die gepunktet dargestellte Linie in Fig. 2 angedeutet werden. Die restlichen Verfahrensschritte erfolgen während des Clusterbetriebes bzw. während eines Fehlers im Clusterbetrieb.

In dem nachfolgend beschriebenen Ausführungsbeispiel werden zwei Fehlerklassen 16 bestimmt.
Eine erste Fehlerklasse 16-1 umfaßt die Fälle, in denen das Verfahren zur Inbetriebnahme des Clusters automatisch angestoßen werden soll.
Eine zweite Fehlerklasse 16-2 umfaßt die Fälle, in denen eine weitere Analyse des Fehlers erfolgen soll und das Verfahren manuell fortgeführt wird. Die erste Fehlerklasse 16-1 wird durch die Parameter definiert "Software Fehler" und/oder "zentraler Spannungsausfall". Das heisst, daß das System automatisch den Zustand des Systems bzw. die Ursache für den Reboot aufgrund des Fehlers analysiert, indem insbesondere die Uptimes der Knoten 12, 14 und das Ergebnis einer Software Fehlererkennung untersucht werden.
Ist das Ergebnis, daß ein Software Fehler oder eine Spannungsunterbrechung vorgelegen haben muß, so wird der Fehler in die erste Fehlerklasse 16-1 eingeordnet. Hier wird angenommen, daß es sich um einen nur vorübergehenden Fehler handelt, der durch ein Reboot und eine Wiederaufnahme des fehlerhaften Knotens in den Cluster behoben werden kann. Deshalb kann in diesen Fällen eine automatisierte Inbetriebnahme erfolgen.
In allen anderen Fällen wird der Fehler in die zweite Fehlerklasse 16-2 eingestuft. Hier wird angenommen, daß es sich um einen schweren Fehler handelt, der durch ein Reboot nicht beseitigt werden kann. Hierunter sind beispielsweise die Fälle eines Hardware Fehlers oder eines schwerwiegenden kombinierten Hard- und Softwarefehlers subsumiert.

Mit der Bestimmung der Fehlerklassen 16 durch den Administrator kann dynamisch eingestellt werden, in welchen Fällen der Cluster 10 automatisch in Betrieb genommen werden soll und in welchen Fällen nicht. Vorteilhafterweise kann damit der Ablauf der Inbetriebnahme des Clusters 10 nach einem Fehler dynamisch an das jeweilige System angepaßt werden, indem beispielsweise bestimmte Fehler einer speziellen Fehlerklasse zugeordnet werden, die eine gesonderte Inbetriebnahme erfordert, da bei einem automatischen wiederholten Einbinden des fehlerhaften Knotens in den Cluster 10 Folgefehler entstehen würden.

Die zweite Fehlerklasse 16-2 kann alternativ Fälle umfassen, in denen zwar auch eine automatische aber zeitlich verzögerte Inbetriebnahme erfolgen soll, um beispielsweise noch weitere Fehleranalysen durchführen zu können. Es kann aber für die zweite Fehlerklasse 16-2 auch festgelegt werden, daß in diesen Fällen immer eine manuelle Inbetriebnahme erfolgen muß.

In beiden Fällen der ersten Fehlerklasse 16-1 ("temporärer Software Fehler" oder "zentraler Spannungsausfall") werden nach dem Reboot die beiden Knoten 12, 14 koordiniert in den Cluster 10 eingebracht.

Durch die fehlerklassengesteuerte Vorgehensweise ist eine dynamische Inbetriebnahme des Clusters (10) abhängig vom jeweils aktuellen Fehlerzustand möglich.

Vorteilhafterweise können bei dem hier vorgestellten Inbetriebnahmekonzept das Bootprogramm bzw. Bootblockprogramm und das Inbetriebnahmeverfahren ineinander verschachtelt sein. Das heißt, daß das Booten nicht notwendigerweise komplett abgeschlossen sein muß, bevor einzelne Schritte der Clusterinbetriebnahme angesteuert werden.

Die Solaris Betriebssystem Umgebung eignet sich sehr gut für die Anwendung bei hochverfügbaren Clustersystemen, da es eine effiziente Kommunikation mit der darunterliegenden Hardwareschicht ermöglicht und weiterhin Überwachungsfunktionen unterstützt und ist deshalb Bestandteil der bevorzugten Ausführungsform des erfindungsgemäßen Systems.

Ein Solaris 2.x-System kann in verschiedenen sogenannten Runleveln gebootet werden. Der Runlevel gibt den Betriebsmodus des Rechners an und definiert den Zustand und die von ihm zur Verfügung gestellten Dienste. Es wird hier insbesondere zwischen acht Runleveln unterschieden. Im Runlevel 0 (auch Monitor Mode genannt) läuft noch kein UNIX, währen im Runlevel 1 der UNIX-Kernel schon aktiviert ist. Das Runlevel 3 (auch Multi User Mode genannt) beschreibt den Zustand, in dem die Maschine bereits über die volle Funktionalität verfügt und in dem bereits alle Filesysteme gemountet sind und die Netzwerkprozesse laufen.

Vorteilhafterweise können mit Hilfe des erfindungsgemäßen Verfahrens beide Clusterknoten bereits synchronisiert und automatisch in Betrieb genommen werden nachdem das Runlevel 3 erreicht wurde.

Zur deutlichen Zeitoptimierung des Verfahrens trägt vor allem der Umstand bei, daß durch die Zuordnung in die jeweiligen Fehlerklassen 16 automatisch die Fälle erkannt werden können, bei denen eine automatische Wiederinbetriebnahme des Clusters möglich ist. Damit kann die Downtime des Systems signifikant reduziert werden, da in allen vorher als nicht-kritisch definierten Fällen eine sofortige Wiederinbetriebnahme erfolgt. Bislang mußte auch in den nicht-kritischen Fällen manuell in Betrieb genommen werden, was eine wesentlich längere Ausfallzeit des Systems nach sich zog.

Bei der Inbetriebnahme des Clusters 10 werden insbesondere folgende Schritte ausgeführt:

Nachdem der erste Knoten 12 in den Cluster 10 aufgenommen worden ist (beispielsweise durch das Kommando "scadmin startcluster") muß überprüft werden, ob dieser Schritt auch erfolgreich ausgeführt werden konnte (beispielsweise mit dem Kommando "hastat"). Anschließend muß der zweite Knoten 14 mit einem anderen Kommando in den Cluster 10 aufgenommen werden (beispielsweise mit dem Kommando "scadmin startnode"), um daraufhin diesen Schritt wiederum auf Fehlerfreiheit zu überprüfen (Kommando "hastat"). Nach dem erfolgreichen Einbinden beider Knoten 12, 14 in den Cluster 10 kann letzterer gestartet werden. Dabei müssen die Dienste bzw. Applikationen registriert werden, die unter die Steuerung des Clustercontrollers fallen sollen.

Die einzelnen Server bzw. Knoten 12, 14 des Clusters 10 stehen vorzugsweise über eine sogenannte private-link-Verbindung miteinander in Datenaustausch. Diese Verbindung ist deshalb redundant ausgelegt, um Ausfälle der Knoten 12, 14 kontrollieren zu können.

In einer alternativen, ebenfalls in Fig. 2 dargestellten Ausführungsform der Erfindung ist das Verfahren erweitert, indem bei einem der Fehlerklasse 16-2 zugeordnetem Fehler, bei dem also kein sofortiger automatischer Inbetriebnahmezyklus angestoßen werden soll, weitere Analysen erfolgen. Durch die automatische Erfassung weitere Parameter, die Rückschlüsse auf die Art des Fehlers erlauben, kann zu einem späteren Zeitpunkt gegebenenfalls doch eine automatische Inbetriebnahme sinnvoll sein oder das Verfahren wird andernfalls beendet.

## Patentansprüche

1. Verfahren zur Inbetriebnahme eines mehrere Knoten umfassenden Clusters (10) nach einem Fehler, welcher zu einem Reboot eines ersten Knotens führt, wobei die Inbetriebnahme Voraussetzung dafür ist, dass Jobs des fehlerbefallenen ersten Knotens (12) des Clusters durch zumindest einen der restlichen zweiten Knoten (14) des Clusters übernommen werden können, wobei das Verfahren durch folgende Schritte gekennzeichnet ist:
- Bestimmung von mindestens zwei Fehlerklassen, wobei die erste Fehlerklasse (16-1) nur Fälle umfasst, in denen eine sofortige automatische Inbetriebnahme des Cluster möglich ist,
- Analyse des Fehlers, der zu einem Reboot des ersten Knotens führte, zur Klassifikation des Fehlers in eine der Fehlerklassen,
- automatische Inbetriebnahme des Clusters, falls der Fehler in die erste Fehlerklasse klassifiziert worden ist.

2. Verfahren nach Anspruch 1,
bei dem die Inbetriebnahme des Clusters für die zweite Fehlerklasse (16-2) nicht automatisch erfolgt.

3. Verfahren nach einem der vorstehenden Ansprüche,
bei dem die Analyse des Fehlers zumindest in einer Power-On-Erkennung besteht, insbesondere durch Auslesen und Vergleichen der Lebenszeiten der Knoten erfolgt.

4. Verfahren nach einem der vorstehenden Ansprüche,
bei dem der Cluster als ein SUN-Clustersystem, insbesondere vom Typ 2.x, ausgebildet ist.

5. Verfahren nach einem der vorstehenden Ansprüche,
bei dem die Inbetriebnahme des Clusters nach dem Reboot des ersten Knotens dann erfolgt, wenn der erste Knoten einen Zustand erreicht hat, in dem er über volle Funktionalität - insbesondere Multi User Mode - verfügt, in dem die Netzwerkprozesse laufen und alle Filesysteme gemountet sind.

6. Verfahren nach einem der vorstehenden Ansprüche,
bei dem der Cluster ein Aktiv-Aktiv-Cluster oder ein Aktiv-Passiv-Cluster ist.

7. Verfahren nach einem der vorstehenden Ansprüche,
bei dem die Analyse des Fehlers, der zu einem Reboot des ersten knotens führte, auf zwei für den Cluster einander zugeordneten Knoten (12, 14) erfolgt.

8. Verfahren nach einem der vorstehenden Ansprüche,
bei dem die Inbetriebnahme des Clusters mit koordinierten Knoten (12, 14) ausgeführt wird, indem die Knoten sequentiell, mit jeweils unterschiedlichen Befehlen in den Cluster eingebunden werden und indem jede dieser Einbindungen auf Fehlerfreiheit überprüft wird.

9. Verfahren nach dem vorstehenden Anspruch,
bei dem die Koordination der Knoten (12, 14) für den Fall, dass der Cluster ein Aktiv-Aktiv-Cluster ist, durch Ermittlung eines Zustands der Knoten auf beiden Seiten des Clusters zu vorbestimmten Koordinationszeitpunkten erfolgt.

10. Computerprogrammprodukt, umfassend Softwarecode, mit dem die Schritte eines Verfahrens nach einem der vorstehenden Ansprüche durch zumindest einen Prozessor ausgeführt werden.

11. Vorrichtung - insbesondere Knoten oder FAIL-OVER Steuerung -, umfassend Mittel, die zur Durchführung der Schritte eines der vorstehenden Verfahren eingerichtet sind.

12. Cluster, umfassend Computerprogrammprodukte nach Anspruch 10 und/oder Vorrichtungen nach Anspruch 11.

## Claims

1. Method of starting up a cluster (10) encompassing a number of nodes after an error, in which, in the event of an error which leads to a reboot of a first node, a prerequisite of the start up is that at least one of the remaining second nodes (14) takes over jobs of a faulty first node (12), said method being identified by the following steps:
- Determining at least one first and one second error class (16-1, 16-2), with the first error class only including cases in which an immediate automatic startup of the cluster is possible,
- Analysis of the error that led to a reboot of the first node (12) for classification of the error into one of the error classes
- Automatic startup of the cluster if the error has been classified into the first error class.

2. Method in accordance with Claim 1,
In which the cluster is not started up automatically for the second error class (16-2).

3. Method in accordance with one of the preceding claims,
In which the analysis of the error consists of at least power-on detection, in particular by reading out and comparing the lifetimes of the nodes.

4. Method in accordance with one of the preceding claims
In which the cluster is a SUN cluster system, in particular of type 2.x.

5. Method in accordance with one of the preceding claims,
In which the startup of the cluster after the reboot of the first node is undertaken when the first node has reached a state in which it has full functionality - especially multi-user mode - available to it, in which the network processes are running and all file systems are mounted.

6. Method in accordance with one of the preceding claims, **characterized in that** the cluster is an active-active cluster or active-passive cluster.

7. Method in accordance with one of the preceding claims,
In which the analysis of the error which led to a reboot of the first node is undertaken at two nodes (12, 14) assigned to each other for the cluster.

8. Method in accordance with one of the preceding claims,
In which the startup of the cluster is performed with coordinated nodes (12, 14), whereby the nodes are included sequentially into the cluster each with different commands and whereby each of these inclusions is checked to ensure that it is free from errors.

9. Method in accordance with Claim 6 and 9,
In which the coordination of the nodes (12, 14) is undertaken for the case where the cluster is an active-active cluster, by determining a state of the nodes on both sides of the cluster at pre-specified coordination times.

10. Computer program product, comprising software code sections with which the steps of a method in accordance with one of the preceding claims is executed by at least one processor.

11. Device - in particular node or FAIL-OVER control - comprising means for executing the steps of one of the present methods.

12. Cluster, comprising computer program products in accordance with Claim 10 and/or devices in accordance with Claim 11.

## Revendications

1. Procédé pour la mise en marche d'un cluster (10) comprenant plusieurs noeuds, après une erreur qui entraîne un redémarrage d'un premier noeud, la mise en marche étant la condition préalable à ce que des tâches du premier noeud (12) du cluster, atteint d'erreur, peuvent être prises en charge par au moins un deuxième (14) des noeuds restants du cluster, le procédé étant
**caractérisé par** les étapes suivantes :
- détermination d'au moins deux classes d'erreur, la première classe d'erreur (16-1) comprenant uniquement des cas dans lesquels une mise en marche automatique immédiate du cluster est possible,
- analyse de l'erreur qui a entraîné un redémarrage du premier noeud, pour la classification de l'erreur dans l'une des classes d'erreur,
- mise en marche automatique du cluster au cas où l'erreur a été classée dans la première classe d'erreur.

2. Procédé selon la revendication 1,
dans lequel la mise en marche du cluster n'est pas réalisée automatiquement pour la deuxième classe d'erreur (16-2).

3. Procédé selon l'une quelconque des revendications précédentes,
dans lequel l'analyse de l'erreur existe au moins dans une identification Power-On, notamment par lecture et comparaison des durées de vie des noeuds.

4. Procédé selon l'une quelconque des revendications précédentes,
dans lequel le cluster est exécuté comme un système cluster SUN, notamment du type 2x.

5. Procédé selon l'une quelconque des revendications précédentes,
dans lequel la mise en marche du cluster après le redémarrage du premier noeud est réalisée lorsque le premier noeud a atteint un état dans lequel il dispose de la fonctionnalité totale - notamment du mode Multi User - dans lequel des processus de réseau se déroulent et tous les systèmes fichiers sont montés.

6. Procédé selon l'une quelconque des revendications précédentes,
dans lequel le cluster est un cluster actif-actif ou un cluster actif-passif.

7. Procédé selon l'une des revendications précédentes,
dans lequel l'analyse de l'erreur qui a entraîné un redémarrage du premier noeud est réalisée sur deux noeuds (12, 14) affectés mutuellement au cluster.

8. Procédé selon l'une quelconque des revendications précédentes,
dans lequel la mise en marche du cluster est exécutée au moyen de noeuds coordonnés (12, 14), du fait que les noeuds sont intégrés de manière séquentielle dans le cluster, au moyen d'instructions respectivement différentes, et du fait qu'il est vérifié si chacune de ces intégrations est exempte d'erreur.

9. Procédé selon la revendication précédente,
dans lequel la coordination des noeuds (12, 14), au cas où le cluster est un cluster actif-actif, est réalisée par détermination d'un état des noeuds des deux côtés du cluster à des moments de coordination prédéfinis.

10. Produit de programme d'ordinateur, comprenant un code de logiciel, au moyen duquel les étapes d'un procédé selon l'une des revendications précédentes sont exécutées au moyen d'au moins un processeur.

11. Dispositif - notamment noeuds ou commande FAIL-OVER - comprenant des moyens qui sont configurés pour l'exécution des étapes de l'un des procédés précédents.

12. Cluster comprenant les produits de programme d'ordinateur selon la revendication 10 et/ou dispositifs selon la revendication 11.
